# EUROPEAN PATENT APPLICATION

(11) **EP 1 388 858 A1**
(43) Date of publication of application: **11.02.2004**
(21) Application number: 03254959.4
(22) Date of filing: 08.08.2003
(51) Int. Cl.: G11B 20/10, G11B 20/12

(54) **Video recording/reproducing apparatus**

(30) Priority: 08.08.2002 KR 2002046941
(71) Applicant: SAMSUNG ELECTRONICS CO., LTD., Suwon-City, Kyungki-do (KR)
(72) Inventor: Kim, Eung-sun, 402-1505, Cheongmyeong 4danji Apt., Suwon-city, Gyunggi-do (KR)
(74) Representative: Geary, Stuart Lloyd

(57) **Abstract**

A video recording/reproducing apparatus (100) and a storage device control method. The video recording/reproducing apparatus (100) temporarily stores a received video signal in a buffer area allocated in a storage device (151) if a command for temporary storage is received from an external input unit (200) to temporarily store in the temporarily allocated buffer area of the storage device (151) built in the video recording/reproducing apparatus (100) a certain amount of the video signal received from a video signal source. Further, the video recording/reproducing apparatus (100) records in the storage device (151) in a long-term basis the video signal temporarily stored in the buffer area according to a set recording format if a recording command instructing a long-term recording process for the temporarily stored video signal of the buffer area is received from the external input unit (200). The apparatus (100) enables a user to selectively allocate a buffer area and to produce and keep an A/V data file for the temporarily stored video signal for a long time.

## Description

The present invention relates to a video recording/reproducing apparatus comprising user input means, control means and storage means comprising a buffer region for temporarily storing an input video signal and a long-term storage region for storing on a long-term basis a video signal stored in the buffer region.

With the digitisation of broadcast television signals and the development of compression technologies, the functions of video recording/reproducing apparatuses capable of recording and reproducing broadcast television signals to and from a recording medium have increased.

It is a trend that video recording/reproducing apparatuses recently appearing in the market are provided with hard disc drives (HDDs), which are mass storage devices. HDDs use addresses to enable random access, which is a method directly accessing desired data. HDDs also transmit data at a high speed and have large storage capacites, so that they can be used as audio and video data recording devices.

It is also a trend that such video recording/reproducing apparatuses have been developed to support the use of a diversity of video sources, such as satellite broadcasts, cable broadcasts, network broadcasts through the internet, and so on.

However, conventional video recording/reproducing apparatuses have the problem that received video signals, which are temporarily stored for reserved recordings and time-delayed viewings can only be stored in a buffer area allocated in a manufacturing process.

A video recording/reproducing apparatus, according to the present invention, is characterised in that the control means is configured to set the size of the buffer region in response to a user input command from the user input means.

Preferably, the control means is configured to set the buffer region such that it extends into a portion of the long-term storage region capable of storing video signals on a long-term basis.

Preferably, video signals stored in the buffer region are stored in a first-in first-out manner and video signals stored in the long-term storage region are stored in A/V files.

Preferably, the control means is configured to copy a video signal stored in the buffer region to another portion of the long-term storage region in which no signal is stored and delete the contents of the buffer region in response to a user input recording command from the user input means.

Preferably, the control means is configured to incorporate a portion of the buffer region containing a video signal into the long-term storage region and allocate a new buffer region in the long-term storage region in response to a user input recording command from the user input means.

Embodiments of the present invention will now be described, by way of example, with reference to the accompanying drawings, in which:
Figure 1 shows a display system to which an embodiment of a video recording/reproducing apparatus according to the present invention is applied;
Figure 2 is a block diagram of the video recording/reproducing apparatus of Figure 1;
Figure 3 is a plan view of the remote controller of Figure 1;
Figure 4A shows an initial menu screen displayed on a display device when a menu key of the remote controller of Figure 3 is selected;
Figure 4B shows a menu screen subsequently displayed when a set-up menu option of the menu screen of Figure 4A is selected;
Figure 4C shows a menu screen provided to set a buffer time when a buffer time menu option the menu screen of Figure 4B is selected;
Figure 5A is a schematic view of a hard disc drive structure in which a buffer area is allocated using the menu screen of Figure 4C;
Figure 5B is a schematically view of a hard disc drive structure after a video signal stored in the buffer area of the hard disc drive of Figure 5A is stored in an A/V data file; and
Figure 6 is a flow chart showing a storage device control method for the embodiment of a video recording/reproducing apparatus according to the present invention.

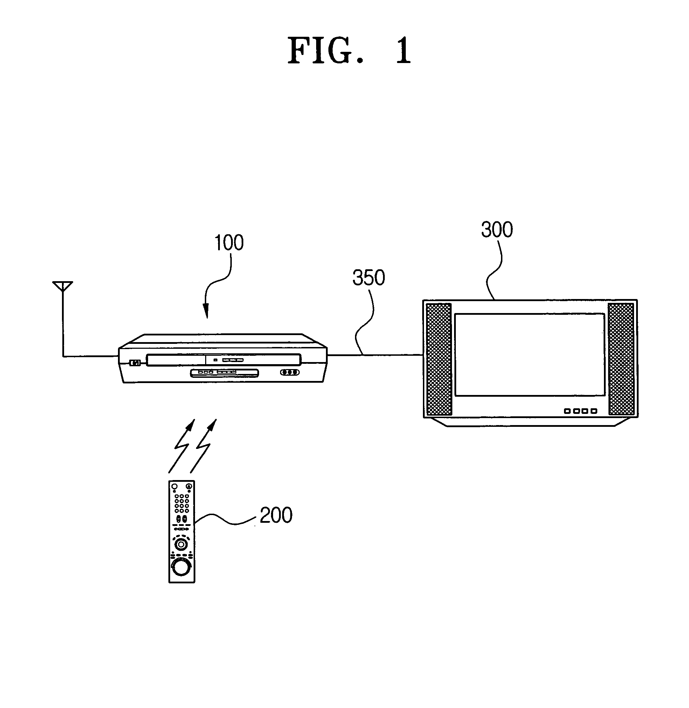

Referring to Figure 1, a video recording/reproducing apparatus 100 is connected to a television set 300, which operates as a display device, via a transmission cable 350. The video recording/reproducing apparatus 100 processes a signal received from a remote controller 200, which is an external input device, and transmits display information to the television set 300. In this example, the external input device may be a remote controller 200, which transmits wireless signals, such as infrared signals, as well as other input devices such as keyboards.

The video recording/reproducing apparatus 100 is built to receive at least one or more video signals provided from multiple video sources. The video sources may be terrestrial television broadcasts, satellite broadcasts, cable inlet lines or other media capable of transmitting signals such as computer lines or modem lines.

More specifically, the embodiment of the present invention to be described below is applied to a video recording/reproducing apparatus built to be able to receive at least one or more video signals from video sources such as cables, satellite dish antennas, local cables, digital broadcast sources (DBSs), general antennas, the Internet, different computer sources, camcorders, disc players, set top boxes, and so on.

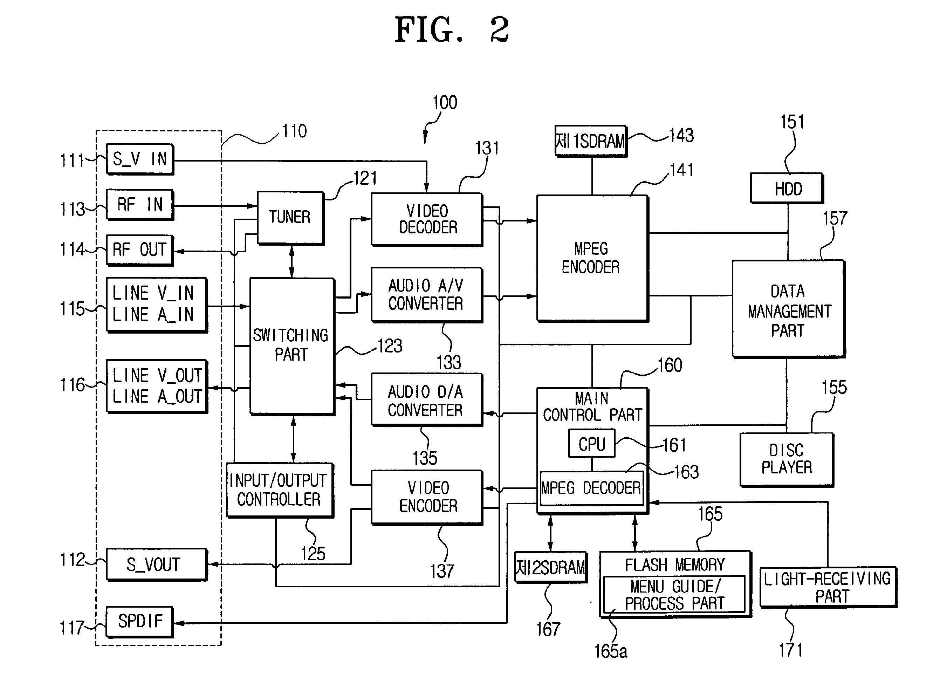

Referring to Figure 2, the video recording/reproducing apparatus 100 has an input/output port part 110, a tuner 121, a switching part 123, an input/output controller 125, an MPEG encoder 141, a hard disc drive (HDD) 151, a disc player 155 and a main control part 160.

The input/output port part 110 can receive signals reproduced from a variety of video signal sources, and output the received signals or signals reproduced from the hard disc drive 151 used as a mass storage device.

The input/output port part 110 is provided with a super video input port (S_V IN) 111, a super video output port (S_V OUT) 112, an RF input port (RF IN) 113, an RF output port (RF OUT) 114, a line video/audio input port (LINE V_IN, LINE A_IN) 115, a line video/audio output port (LINE V_OUT, LINE A_OUT) 116, and a serial parallel digital interface (SPDIF) 117.

A more detailed description of either an input port or an output port of the different signal formats will now be provided. The super video input port 111 is a port for receiving a separate luminance signal Y and chrominance signals Cr, Cb in a digital format, and is used in connection with digital camcorders, DVD players, set top boxes, and so on. The RF input port 113 is a port for receiving an broadcast radio signal and is generally connected to an antenna.

The line video/audio input port 115 is a port for receiving a mixed analogue signal including a luminance signal Y and chrominance signals, and is used in connection with camcorders, DVD players, set top boxes, and so on. which support an analogue video signal output. The digital audio output port 117 is a port for externally outputting a digital audio signal transmitted from the main control part.

The tuner 121 tunes to a reception channel so that the broadcast signal of a channel requested by the input/output controller 125 under the control of the main control part 160 can be received through the RF input port 113. The switching part 123 is controlled by the input/output controller 125 to selectively connect the input/output ports, which are connected to the switching part 123, to one another.

A video decoder 131 is controlled by the main control part 160 to decode and output a signal received through the super video input port 111 or the switching part 123. An audio A/D converter 133 converts an analogue audio signal input through the switching part 123 into a digital signal and outputs the digital signal to the MPEG encoder 141.

The MPEG encoder 141 is controlled by the main control part 160 to encode an audio signal output from the audio A/D converter 133 and a video signal output from the video decoder 131 in a set compression format, and to store data to be stored in the hard disc drive 151. Preferably, the MPEG encoder 141 carries out encoding according to the MPEG-2 compression format.

A first SDRAM 143 is a memory used in the encoding process of the MPEG encoder 141. A data management part 157 manages the reproduction and recording of data stored in the hard disc drive 151 and/or in a recording medium mounted to the disc player 155. That is, the data management part 157 is controlled by the main control part 160 to manage the storage of the data recorded in the recording medium mounted to the disc player 155 onto the hard disc drive 151, the storage of data stored on the hard disc drive 151 to the disc player 155, or the storage of the data encoded in the MPEG encoder 141 onto the hard disc drive 151.

The disc player 155 is built in the video recording/reproducing apparatus. The disc player 155 may be a DVD player for reproducing data stored in a recording medium such as a digital versatile disk (DVD) and/or a compact disc (CD). The disc player 155 is controlled by the main control part 160 to perform recording/reproducing operations.

A light-receiving part 171 is used as an interface unit, which receives a user manipulation signal output from an external input device, such as the remote controller 200, and outputs the signal to the main control part 160. The main control part 160 processes the user manipulation signal received using the light-receiving part 171 and controls the respective parts of the apparatus. The main control part 160 is formed from a single IC chip combining a central processing unit (CPU) 161 and an MPEG decoder 163 for decoding a signal compressed in MPEG format. Alternatively, the MPEG decoder 163 may be provided as a separate chip and be connected to the main control part 160.

A flash memory 165 stores various programs related to the performance of the functions of the main control part 160. The flash memory 165 is provided with a menu guide/process part 165a in which a graphic user interface (GUI) program is stored that carries out processes relating to a menu screen to be described later. A second SDRAM 167 is a temporary storage space used by the main control part 160.

The audio D/A converter 135 converts a digital audio signal output from the MPEG decoder 163 of the main control part 160 into an analogue audio signal and outputs the analogue audio signal to the switching part 123. A video encoder 137 encodes video signals output from the video decoder 131 and the MPEG decoder 163 and outputs the resulting encoded video signals to the switching part 123. The input/output controller 125 is controlled by the main control part 160 to control the tuner 121 and the switching part 123. The main control part 160 loads operating programs stored in the flash memory 165 to carry out various functions corresponding to signals received through the light-receiving part 171 from the remote controller 200.

The storage device control method of the main control part based on key selections from the remote controller is described in detail in connection with the menu screen.

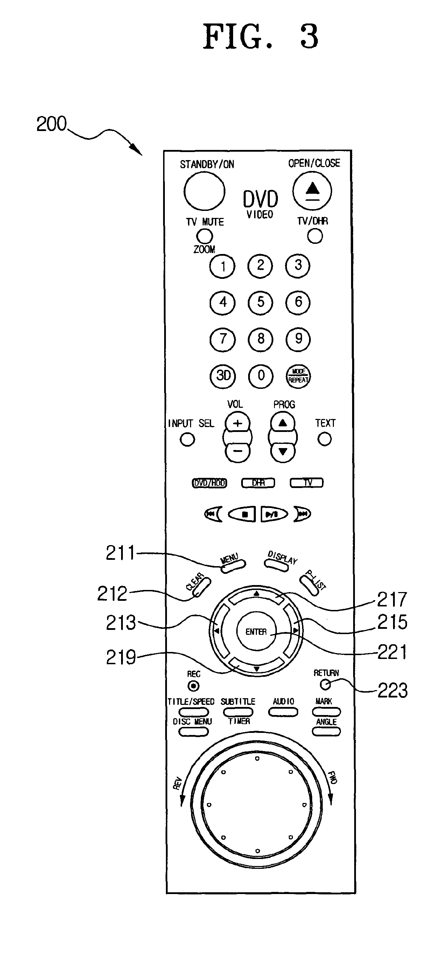

The manipulations of the menu screen will now be described with reference to Figure 3 in which the remote controller 200 is shown as an external input device for the video recording/reproducing apparatus 100.

Referring to Figure 3, the remote controller 200 is provided with a menu key 211 used when loading and closing a menu screen, up, down, left, and right direction keys 217, 219, 213, 215 used for moving a cursor with respect to items listed on the menu screen to be described later. Furthermore, an enter key 221 is provided for use when selecting menus, and a return key 223 is provided for use when returning from a current screen to a previous screen.

The rest of the keys are well-known and descriptions of the specific keys for manipulating the video recording/reproducing apparatus 100 and the television set 300 will be omitted since the functions of such keys can be clearly understood from the lettering next to each key.

A method for producing an audio and video data file after temporarily storing a video signal in a storage device provided in the video recording/reproducing apparatus will now be described.

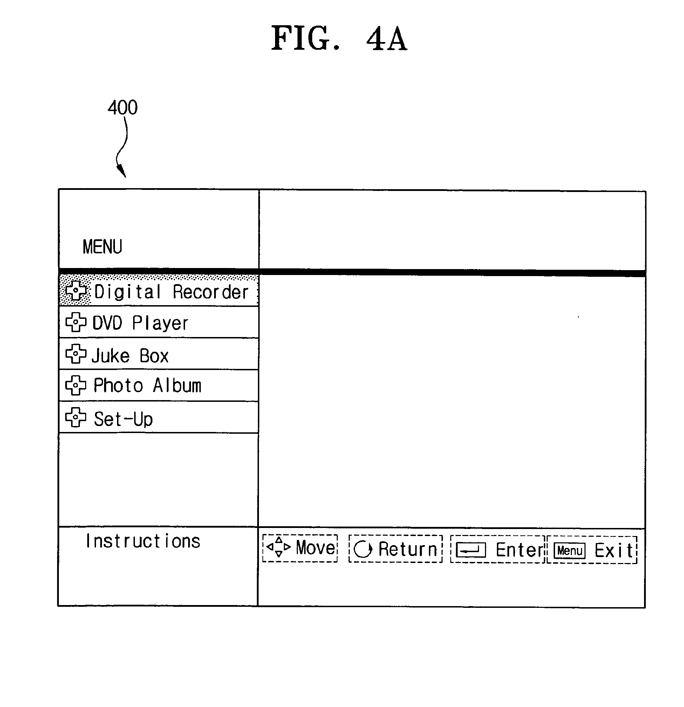

Referring to Figure 3 and Figure 4A, if the light-receiving part 171 receives a signal generated when the menu key 211 of the remote controller 200 is selected, the main control part 160 runs the GUI program stored in the menu guide/process part 165a to provide an initial menu screen 400 on the television set 300 through the line video/audio output port 116.

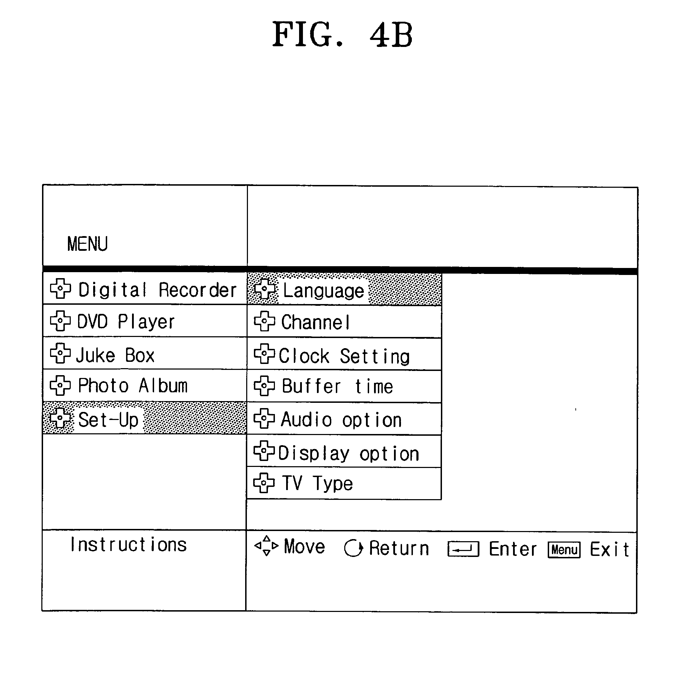

When a "Set-Up" menu is selected from the menu options of the initial menu screen 400 by using the direction keys 213, 215, 217, 219 and the enter key 221 of the remote controller 200, as shown in Figure 4B, a first submenu belonging to the "Set-Up" menu option is displayed together with the main menu.

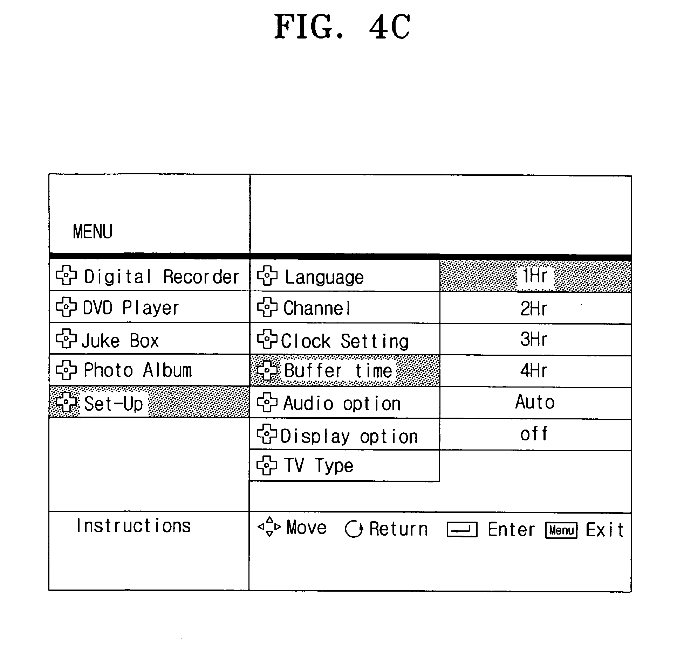

Furthermore, when a "Buffer Time" menu is selected from the menu options shown in Figure 4B by using the direction keys 213, 215, 217, 219 and the enter key 221 of the remote controller 200, as shown in Figure 4C, a second submenu belonging to the "Buffer Time" menu option is displayed together with the main menu and the first submenu.

Referring to Figure 4C, the "Buffer Time" of the first submenu is a time shift function used when setting a video signal received from a selected video signal source to be temporarily stored in the hard disc drive 151 in a first-in first-out manner for an amount of time determined using the second submenu. For example, if a "1Hr" menu option is selected from the second submenu by using the remote controller 200, a setting is made to temporarily store in the hard disc drive 151 a video signal received from a predetermined video signal source in a 1-hour amount, and, if a "2Hr" menu option is selected, setting is made to temporarily store a received video signal in the hard disc drive 151 in a 2-hour amount.

Furthermore, when the "Auto" menu option is selected, a setting is made to temporarily store a received video signal in all of the available storage space of the hard disc drive 151. When the "Off" menu option is selected, a received video signal is not temporarily stored in the hard disc drive 151. The video signal source includes at least one of the tuner 121 receiving broadcast signals, a disc player 155 reproducing a signal recorded in a DVD and the external input ports 111, 113, 115 inputting video signals from external devices.

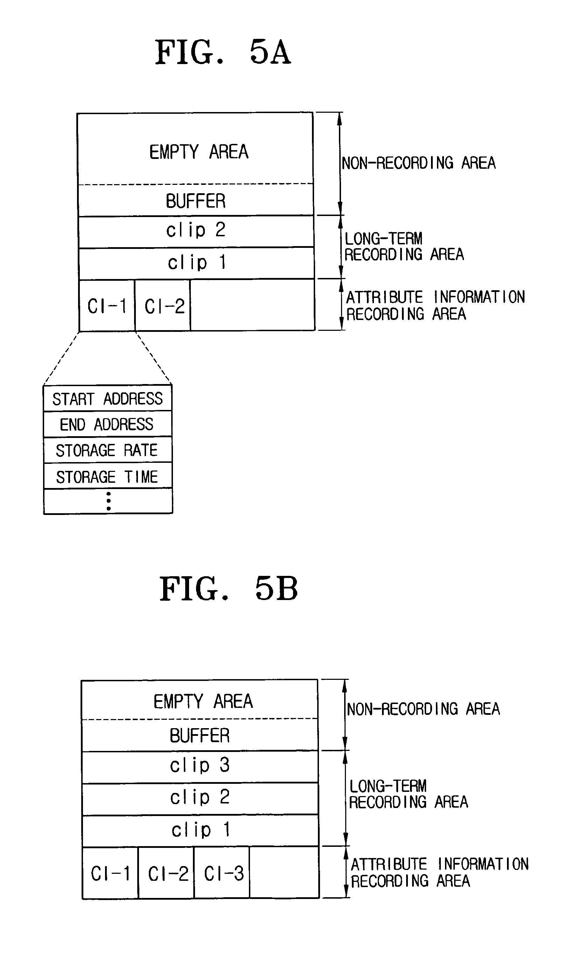

Referring to Figure 5A, the hard disc drive 151 is divided into a long-term recording area, an attribute information recording area and a non-recording area. The non-recording area refers to an area in which any data, such as video signals, is not stored nor recorded, but in which data can be recorded by the control of the main control part 160 in the event that a recording instruction for a received video signal is input from the remote controller 200.

In more detail, if a certain buffer time is selected using the remote controller 200 from a menu screen as shown in Figure 4C, which is displayed on the television set 300, a buffer area corresponding to the selected buffer time is allocated in the non-recording area. The remaining part of the non-recording area, which is not allocated as the buffer area, remains as an empty area.

When the buffer time selected from the menu screen of Figure 4C is "1Hr", a buffer area is allocated in part of the non-recording area to store a received video signal by a "one-hour" amount. Furthermore, if the buffer time selected from the menu screen is "Auto", the buffer area is allocated over the entire non-recording area.

The buffer area is an area which can temporarily store a received video signal, in an amount of hours selected in advance, in the first-in first-out (FIFO) manner. For example, if a "2Hr" buffer time and a video signal source for temporary storage are selected using the remote controller 200 and a start time at which a video signal is temporarily stored is "one o'clock in the afternoon", a video signal from 1 p.m. to 3 p.m. is temporarily stored in the buffer area. Further, even though the start time at which a video signal is temporarily stored is "one o'clock in the afternoon", a video signal of two-hour amount such as from 2:30 p.m. to 4:30 p.m., from 3 p.m. to 5 p.m., and the like will be temporarily stored in the buffer area, as time progresses, in the FIFO manner while shifting in the buffer area.

The long-term recording area is an area for recording a video signal on a long term basis by storing the video signal as an audio and video (AV) data file based on a user's recording instruction. The long-term recording AV data file can be retained for a long time as well as edited according to a user's preference.

In the attribute information recording area, attribute information of a video signal is registered and recorded as a clip stored in an AV data file. The attribute information of the video signal includes a start address, end address, recording rate, recording time, and so on, of an AV data file in which a video signal is stored, of which at least one attribute is recorded in the attribute information recording area.

The attribute information recording area has a time map (TMAP) structure by which a video signal temporarily stored in the buffer area is registered as a clip. The TMAP connects attribute information with a video signal, that is, it connects recording positions with video signal data corresponding thereto.

In the long-term recording area of Figure 5a, two A/V data files registered as clips, clip 1 and clip 2, are recorded and in the attribute information recording area attribute information CI-1 (Clip Information-1) and CI-2 (Clip Information-2) for clip 1 and clip 2 are recorded.

If a recording command instructing the long-term recording of a video signal temporarily stored in the buffer area of Figure 5a is received from the remote controller 200, the video signal temporarily stored in the buffer area is recorded in the hard disc drive 151 on a long term basis in accordance with a set recording format. The recording command for the long-term recording process refers to the storage of a temporarily stored video signal as an A/V data file.

The set recording format for recording a temporarily stored video signal is generally one of two types.

In the first case, when a recording command instructing a long-term recording process is received from the remote controller 200, the main control part 160 sets a new buffer area with respect to the non-recording area of the hard disc drive 151, and records on a long term basis a video signal temporarily stored in a previous buffer area in that previous buffer area, for example, as shown by clip 3 of Figure 5b. At this time, the main control unit 160 processes the attribute information on the video signal recorded on a long-term basis, and records the attribute information as CI-3 in the attribute information recording area. Preferably, if a buffer area in which a video signal is temporarily stored is not full to capacity and has an extra storage area, the main control part 160 incorporates the extra storage area into the non-recording area. For example, in the case that a buffer time of "2Hr" is selected and set using the remote controller 200 and the actual amount of a video signal temporarily stored in the buffer area corresponds to "one hour", the buffer area corresponding to the remaining "one hour" long amount is incorporated into the non-recording area.

In the second case, when a recording command instructing a long-term recording process is received from the remote controller 200, the main control part 160 copies a temporarily stored video signal from the buffer area, records it in the non-recording area of the hard disc drive 151, and deletes the video signal temporarily stored in the buffer area. At this time, the main control part 160 records, in the set attribute information recording area, the attribute information of the video signal copied and recorded on a long-term basis in the non-recording area. Furthermore, the buffer area from which the temporarily stored video signal is deleted, is incorporated into the non-recording area.

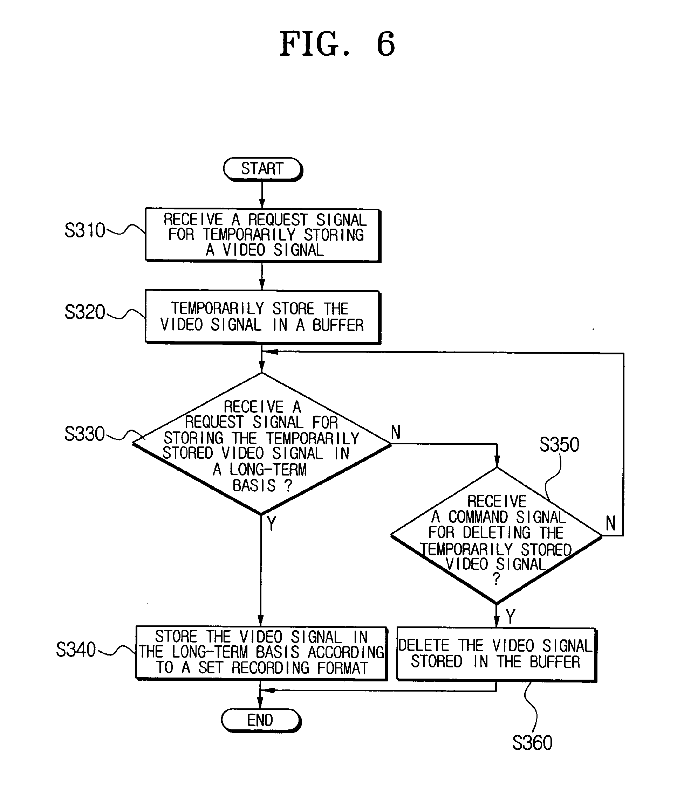

Referring to Figure 6, if a request signal is received from the remote controller 200 to temporarily store a certain amount of a video signal received from a video signal source in a temporarily allocated buffer area of the hard disc drive 151 (step S310), the main control part 160 temporarily stores the received video signal in the buffer area (step S320). Furthermore, if a request signal is received from the remote controller 200 to store, on a long-term basis, the video signal temporarily stored in the buffer area (step S330), the main control part 160 stores the video signal in the buffer area on a long-term basis according to a set recording format (step S340). The step S340 is a step for generating an A/V data file with respect to the temporarily stored video signal.

If a long-term storage request signal is not received for the temporarily stored video signal in the S330, the main control part 160 checks whether a delete command signal is received for the temporarily stored video signal (step S350). If the delete command signal is received from the step S350, the main control part 160 deletes the video signal temporarily stored in the buffer area (step S360).

The embodiment of the video recording/reproducing apparatus and the storage device control method thereof described above can temporarily allocate the buffer area in an extra space of a storage device mounted to the video recording/reproducing apparatus, and temporarily store a received video signal in the allocated buffer area. Further, the allocated amount of the buffer area can be adjusted according to a user's selection. Furthermore, the embodiment of the present invention generates and stores, on a long-term basis, an A/V data file for the temporarily stored video signal, to thereby enable time-delayed viewings.

## Claims

1. A video recording/reproducing apparatus comprising user input means (200), control means (160) and storage means (151) comprising a buffer region for temporarily storing an input video signal and a long-term storage region for storing on a long-term basis a video signal stored in the buffer region, **characterised in that** the control means (160) is configured to set the size of the buffer region in response to a user input command from the user input means (200).

2. An apparatus according to claim 1, wherein the control means (160) is configured to set the buffer region such that it extends into a portion of the long-term storage region capable of storing video signals on a long-term basis.

3. An apparatus according to claim 1 or 2, wherein video signals stored in the buffer region are stored in a first-in first-out manner and video signals stored in the long-term storage region are stored in A/V files.

4. An apparatus according to claim 1, 2 or 3, wherein the control means (160) is configured to copy a video signal stored in the buffer region to another portion of the long-term storage region in which no signal is stored and delete the contents of the buffer region in response to a user input recording command from the user input means (200).

5. An apparatus according to claim 1, 2 or 3, wherein the control means (160) is configured to incorporate a portion of the buffer region containing a video signal into the long-term storage region and allocate a new buffer region in the long-term storage region in response to a user input recording command from the user input means (200).

6. A video recording/reproducing apparatus capable of storing in a storage device a video signal received from a video signal source, and reproducing and outputting the stored video signal to an display device, comprising:
an input unit for selecting a function supported in the video recording/reproducing apparatus and outputting a command; and
a main control unit for temporarily storing a received video signal in a buffer area allocated in the storage device if a command for temporary storage is received from the input unit so that a certain amount of the video signal received from the video signal source is temporarily stored in the temporarily allocated buffer area of the storage device, and for recording in the storage device in a long-term basis the video signal temporarily stored in the buffer area according to a set recording format if a recording command instructing a long-term recording process for the temporarily stored video signal of the buffer area is received from the input unit.

7. The video recording/reproducing apparatus as claimed in claim 6, wherein:
if the recording command instructing the long-term recording process is received from the input unit, the main control unit sets a new buffer area in a non-recording area of the storage device, records in a previous buffer area in a long-term basis a video signal temporarily stored in the previous buffer area, and records attribute information of the long-term recorded video signal in a set attribute information recording area.

8. The video recording/reproducing apparatus as claimed in claim 7, wherein:
if the buffer area in which the video signal is temporarily stored has a remaining storage space, the main control unit incorporates the remaining storage space into the non-recording area.

9. The video recording/reproducing apparatus as claimed in claim 7, wherein:
if the recording command instructing the long-term recording process is received from the input unit, the main control unit copies and records in the non-recording area of the storage device the video signal temporarily stored in the buffer area, deletes the video signal temporarily stored in the buffer area, and records in the set attribute information recording area the attribute information of the video signal recorded in the non-recording area in the long-term basis.

10. The video recording/reproducing apparatus as claimed in claim 7, wherein:
the attribute information of the video signal recorded in the attribute information recording area has at least any one of a start address, an end address, a recording rate, and a recording time of the video signal.

11. The video recording/reproducing apparatus as claimed in claim 6, wherein:
if a command signal for deleting the video signal temporarily stored in the buffer area is received from the input unit, the main control unit deletes the video signal temporarily stored in the buffer area.

12. The video recording/reproducing apparatus as claimed in claim 6, further comprising:
an interface unit mounted in a main body to receive the command transmitted from the input unit.

13. The video recording/reproducing apparatus as claimed in claim 6, wherein:
the input unit includes an external input unit which is external of the apparatus.

14. The video recording/reproducing apparatus as claimed in claim 13, wherein:
the external input unit includes a remote controller provided with a plurality of keys and transmits infrared signals corresponding to key selections.

15. The video recording/reproducing apparatus as claimed in claim 14, further comprising:
an interface unit mounted in a main body and including a light-receiving part for receiving the infrared signals transmitted from the remote controller.

16. The video recording/reproducing apparatus as claimed in claim 6, wherein:
the video signal source includes any one of a tuner receiving broadcast signals, a disc player reproducing a signal recorded in a recording medium, and an external input port inputting video signals from external devices.

17. The video recording/reproducing apparatus as claimed in claim 6, wherein:
the storage device includes a hard disc driven by a hard disc drive.

18. A storage device control method for a video recording/reproducing apparatus capable of storing in a storage device a video signal received from a video signal source, and reproducing and outputting the stored video signal to a display device, comprising steps of:
storing a received video signal in a buffer area allocated in the storage device if a request signal is received from an input unit so that a certain amount of the received video signal from the video signal source is temporarily stored in the temporarily allocated buffer area of the storage device; and
storing the temporarily stored video signal of the buffer area in a long-term basis according to a set recording format if a recording command instructing a long-term recording process for the temporarily stored video signal of the buffer area is received from the input unit.

19. The storage device control method as claimed in claim 18, wherein the step of storing to the set recording format includes steps of:
setting a new buffer area in a non-recording area of the storage device;
recording the temporarily stored video signal of a previous buffer area in the previous buffer area in the long-term basis, wherein attribute information of the video signal recorded in the long-term basis is recorded in a set attribute information recording area.

20. The storage device control method as claimed in claim 18, wherein the step of storing to the set recording format includes steps of:
copying and recording the temporarily stored video signal of the buffer area in a non-recording area of the storage device; and
deleting the temporarily stored video signal of the buffer area, wherein attribute information of the video signal recorded in the long-term basis in the non-recording area in the deleting step is recorded in a set attribute information recording area.

21. The storage device control method as claimed in claim 18, wherein:
the input unit is external of the video recording/reproducing apparatus.
